# EUROPEAN PATENT SPECIFICATION

(11) **EP 0 635 205 B1**
(45) Date of publication and mention of the grant of the patent: **07.10.1998**
(21) Application number: 93202132.2
(22) Date of filing: 20.07.1993
(51) Int. Cl.: A01K 1/01, A01K 1/00, A01C 3/00

(54) **Climate control and method for controlling the climate in cattle houses and the like**
Klimaregulierung und Verfahren zur Klimaregulierung in Viehställen und dergleichen
Contrôle de climatisation et procédé de contrôle de climatisation d'étables pour bovins et similaires

(43) Date of publication of application: 25.01.1995
(73) Proprietor: TOLSMA TECHNIEK B.V., NL-8304 AT Emmeloord (NL)
(72) Inventor: Tolsma, Auke, NL-8303 AE Emmeloord (NL)
(74) Representative: Smulders, Theodorus A.H.J., Ir.

(56) References cited:
- EP-A- 0 331 219
- EP-A- 0 498 084
- EP-A- 0 518 438
- WO-A-80/00486
- NL-A- 7 903 449
- NL-A- 8 601 185

## Description

The invention relates to a climate control system for cattle houses and the like, comprising a transport system on which liquid and solid excrements of the cattle can be deposited and means for separating from each other at least a part of said liquid and solid excrements before they can mix. A problem with cattle houses is that the air in the cattle house often contains aggressive gases which arise inter alia from liquid and solid excrements of the cattle. These excrements end up on the floor of the cattle house, mix with each other, for instance as a result of the cattle treading on them, and react with each other to form inter alia gaseous ammonia which is very harmful to man, animals and the environment.

These aggressive gaseous substances in the air of the cattle house will have to be removed, not only in the interest of the cattle, but also in the interest of man. The spent air which contains the aggressive gases is discharged from the cattle house into the atmosphere, while fresh outside air is supplied to the cattle house. A drawback of such a system is that the environment will be seriously polluted by this strongly polluted air which is discharged into the atmosphere. In view of the ever stricter environmental requirements, this leads to an unacceptable situation.

This problem can be reduced in an implement, comprising a transport system on which liquid and solid excrements of the cattle can be deposited and means for separating from each other at least a part of said liquid and solid excrements, as known from EP-A-0 498 084. In the implement described therein the means for separating liquid and solid excrements are separated from each other are formed by the transport system; in other words, the separation is realized mechanically. Although the liquid and solid excrements on the transport system are predryed by an air stream, a substantial amount of liquid remains on the transport system and in the solid excrements. The consequence is that still, true enough a reduced amount of aggressive gases will be released. As furthermore, the air stream is supplied from beneath the transport system and discharged upwardly via the space of the cattle house where the cattle are accommodated, the air in said space will contain aggressive gases.

In order to obtain a further reduction of released aggressive gases and to keep the space of the cattle house where the cattle are accommodated free from said aggressive gases the system as described in the opening paragraph is, according to the invention, characterized in that the system further comprises air supply means by means of which an air stream, heated by the annual heat of the cattle, is passed along the transport system, and a heating device which together with the heated air stream provide for the separation of the liquid and solid excrements by drying the excrements at least to such an extent that the development of aggressive gases is practically prevented. In other words the separation of the liquid and solid excrements from each other is realised by evaporation of the liquid; only the solid excrements will still contain a small percentage of liquid. Ureum from the liquid excrements will be precipitated on the transport system. So, the system has the advantage that on the transport system only dried excrements are obtained as end products, which, for instance through grinding, can be stored in bags or in bulk. Moreover, the environment is not polluted with the excrements of the cattle either. In connection, the system is so dimensioned that during the transport dried excrements contain less than, for instance, not more than 5-15% moisture particles. The dried excrements will then have a volume amounting to approximately 20% of the still undried excrements.

Further, use is made of an air stream, heated by the animal heat of the cattle. In addition to the advantage that energy of the animals is utilized, the air stream is supplied via the upper side of the cattle house, via the space where the animals are accommodated to the transport system, so that, when a small amount of aggressive gases is still released, the space where the animals are accommodated is kept free of these gases.

According to an advantageous embodiment of the invention, the system comprises an apertured floor in the cattle house, the transport system being located under the floor of the cattle house, so that the liquid and solid excrements of the cattle will fall thereon through the apertures in the floor, and comprising a sloping surface along which liquid excrements flow down to a collecting area on the transport system, so that the liquid and solid excrements are at least partly mechanically separated.

By virtue of the sloping surface, liquid and solid excrements will be quickly separated from each other. In particular, the transport system conveys the excrements along a discharge path to a collecting place which is located outside a space of the cattle house where the cattle are accommodated.

According to another aspect of the invention, the transport system comprises at least one endless conveyor passed round reversing means. Preferably, the collecting area extends along at least a portion of an upper part of the conveyor, the collecting area being bounded on either side by said surface sloping in the transverse direction of the conveyor and extending in the longitudinal direction of the conveyor.

The heating means for promoting the drying process of the excrements during transport are preferably located under the upper part of the conveyor and extend in the longitudinal direction of at least a portion of the conveyor.

According to another aspect of the invention, the system comprises means for supplying fresh air to at least a space of the cattle house where the cattle are accommodated and for discharging spent air of the accommodation space for controlling the climate in the accommodation space, the air being passed along the transport system for the excrements to dry.

According to a highly advantageous embodiment, the system further comprises a return flow path with air treatment means, the discharged, spent air of the accommodation space being supplied to the return flow path, the air treatment means removing aggressive gases from the discharged spent air so as to obtain the fresh air which is returned to the accommodation space via the return flow path. This provides the advantage that no spent air at all is discharged into the atmosphere, so that the environment is not polluted at all. In this connection, the return flow path will preferably coincide partly with the discharge path. According to an advantageous embodiment, the air treatment means are included in a part of the return flow path that does not coincide with the discharge path. The ideal temperature of a cattle accommodation space is preferably between 18 and 20 degrees centigrade. Since the outside air is often colder than this ideal temperature, in known systems the outside air supplied will have to be properly heated so as to obtain the desired temperature in the cattle house. This requires a large amount of energy. On the other hand, in known systems spent air of a temperature of 18-20° C is supplied to the atmosphere, so that a large amount of energy is lost. Accordingly, on balance, the known climate control system consumes a great deal of energy, which renders the system less attractive from an economic point of view.

According to another aspect of the invention, the cattle house is of substantially airtight construction, so that it is even better ensured that no pollutants are discharged into the environment.

According to a particularly advantageous embodiment, the air treatment means comprise a cooler for cooling the spent air, the heat withdrawn from the spent air by the cooler being at least partly supplied to the heating means. The cattle in the accommodation space produce a great deal of heat, so that with the aid of a cooler the temperature of the accommodation space can be properly adjusted to an ideal temperature for the cattle. This embodiment moreover provides the advantage that particularly little energy is required for the operation of the system, since the heating means use energy which is produced by the cattle themselves. Accordingly, the energy produced by the cattle is used for the further processing of excrements produced by the cattle.

The air treatment means may further comprise a biofilter for removing aggressive gases from the air, means for abstracting water vapour from the spent air and for killing micro-organisms present in the spent air. The air thus obtained is particularly suitable to be returned to the accommodation space.

The return flow path can moreover comprise an exterior discharge whereby a percentage of the air which passes through the return flow path is discharged into the atmosphere and an air supply whereby outside air is supplied to the return flow path. The result achieved is that the carbon dioxide content of the air in the accommodation space can be maintained at a level not unfavourable to man and animals.

In accordance with the invention, in large cattle farms, the cattle house may comprise a plurality of mutually separate accommodation spaces where the cattle are accommodated, each accommodation space comprising a floor with apertures under which a part of the transport system is located, the transport system being so designed that excrements which fall onto the transport system through an aperture in a floor are conveyed to a central collecting place. In summary, according to the invention, a cattle house can be realized which comprises an ecologically sound and energetically advantageous climate control system. This prevents large amouns of aggressive gases from developing from the excrements of the cattle. Moreover, the excrements can be dried, yielding a residue which can easily be further processed and handled.

The invention further relates to a method for processing liquid and solid excrements of cattle accommodated in a cattle house, where liquid and solid excrements of the cattle are deposited on a transport system, wherein at least a part of the liquid and solid excrements of the cattle are separated from each other before they can mix, characterised by drying the excrements on the transport system at least to such an extent that the development of aggressive gases is practically prevented, which method is further characterized in that said drying is realized by utilising a separate heating device and by passing an air stream heated by the animal heat of the cattle along the transport system.

One possible embodiment of a climate control system according to the invention will now be described with reference to the following drawings, in which
Fig. 1 is a diagrammatic plan of the cattle house comprising a climate control system according to the invention;
Fig. 2 is a section of the cattle house taken along the line II-II of Fig. 1;
Fig. 3 is a section of the cattle house taken along the line III-III of Fig. 1;
Fig. 4 is a longitudinal section of a part of a first embodiment of the conveying apparatus of Fig. 2;
Fig. 5 is a section of the cattle house taken along the line V-V of Fig. 1;
Fig. 6 is a cross section of a second embodiment of the conveying apparatus of Fig. 2;
Fig. 7 is a cross section of the conveyor of Fig. 4; and
Fig. 8 shows a cattle house comprising a plurality of accommodation spaces with a conveying system according to the invention.

In the following drawings, like parts have been provided with the same reference numerals. Reference numeral 1 designates a cattle house with a climate control system 2 according to the invention. The cattle house 1 comprises a space 3 where the cattle 4 are accommodated. The floor 6 of the cattle house is provided, in the accommodation space 3, with a first portion 8 which consists of a closed concrete floor and a second portion 10 which is provided with apertures 12 which provide an open communication between the accommodation space 3 and a discharge space 14 located under the floor 6. The second portion 10 of the floor may for instance be provided with a metal grid.

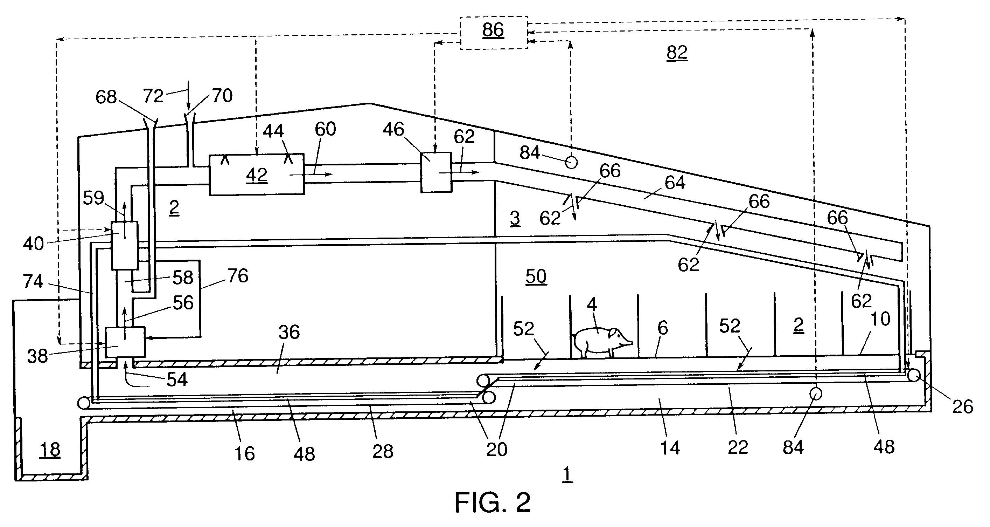

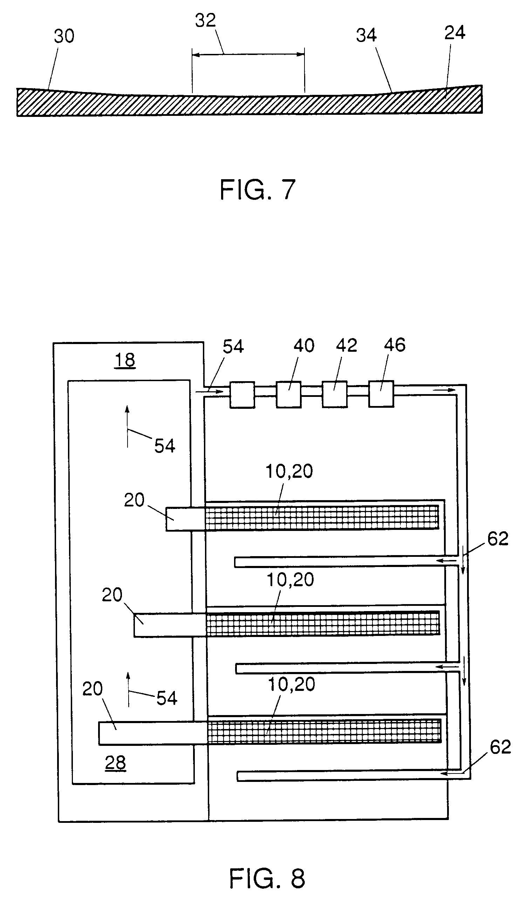

The cattle 4, in this case pigs, are accommodated on the first and second portions 8, 10 of the floor 6. The accommodation space is subdivided into individual spaces for the cattle through interior partitions 13. The first floor portion 8 functions as bedding for the cattle whilst the second portion functions as manure location. The cattle house 1 is of airtight construction, so that no air can escape from the cattle house to the atmosphere. The climate control system 2 further comprises a discharge path 16 for the liquid and solid excrements of the cattle, which is located under the floor 6 of the cattle house. The discharge path 16 begins under the second portion 10 of the floor 6 and terminates in a collecting space 18 for the excrements, the collecting space being located outside the accommodation space 3. The discharge path 16 comprises a transport system 20 which in this case comprises a first conveyor belt unit 22 with a conveyor 24 whose upper run moves in the direction of the reservoir, i.e., to the left in Fig. 2. To that end, the endless conveyor 24 is provided with two reversing means 26. The transport system 20 further comprises a second conveyor belt unit 28 which in this case is arranged lower than the first conveyor belt unit 26 and partly overlaps the first conveyor belt unit in the direction of the discharge path. Otherwise, the second conveyor belt unit 28 is identical to the first conveyor belt unit 22 and moreover is driven in the same direction. The conveyors 24 of the first and second conveyor belt units 22, 28 are provided, on their transport side, with a concave surface 30. The conveyor 24 is thus provided with a collecting area indicated in Figs. 6 and 7 by the arrow 32. The collecting area 32 is bounded on either side by a surface 34 sloping in the transverse direction of the conveyor and extending in the lengthwise direction of the conveyor.

Preferably, the climate control system 2 includes a return flow path 36 comprising a biofilter 38, a cooler 40, a space 42 with UV lamps 44 and a fan 46. The fan 46 blows air into the accommodation space 3. The flow of air in the climate control system 2 is indicated in the drawings by means of arrows. Moreover, the climate control system 2 may further comprise a heating device 48 which in this case is located under the top run of the conveyor 24 in both the first and the second conveyor belt unit 22, 28.

The liquid and solid excrements end up on the second portion 10 of the floor 6. The cattle will tread these excrements through the apertures 12 of the second floor portion 10. The excrements then fall onto the conveyor 24 of the first conveyor belt unit 22. By virtue of the transport surface of the conveyor being of concave design in accordance with the invention, the liquid excrements will flow directly along the sloping surface 34 to the collecting area 32. As a result, the liquid and solid excrements are separated from each other without mixing with each other. This prevents that at least substantially no aggressive gases such as ammonia will be released into the accommodation space 3.

The transport system 20 will convey the at least substantially separated solid and liquid excrements via conveyor belt units 22, 26 in the direction of the collecting space 18.

According to another aspect of the invention, the excrements will have been dried at least substantially by the time they are delivered into the collecting space 18 by the transport system 20. A first possibility of achieving this is to sufficiently amply dimension the time during which the excrements are disposed on the transport system in terms of the length of the discharge path and/or the conveying speed of the transport system. It is also possible to vary the conveying speed or to temporarily reduce it to zero so as to allow the excrements to dry properly.

The air 50 from the accommodation space 3 is passed via the return flow path 36 to the biofilter 38. This air 50 will at least substantially be free of aggressive gases because their release has been prevented in accordance with one aspect of the invention. Insofar as aggressive gases have yet been released, they will be extracted.

It is observed that the return flow path 36 and discharge path 16 coincide at least partly. As a result, spent air will flow along the excrements disposed on the transport system 20. This air 52 will further promote and thereby accelerate the drying of the excrements. The result of all this is that the required retention time on the transport system 20 can be limited whilst the excrements reach the collecting space 18 in at least substantially dried form.

The air 54 is supplied to the biofilter 38 and will have a high relative humidity due to the moisture abstracted from the excrements. The biofilter 38 can be of any generally known type and comprises means for removing from the spent air 54 aggressive substances which will be present only to a very limited extent. The air 56 which has passed through the biofilter 38 is subsequently passed via channel section 58 of the return flow path 36 to the cooler 40. In channel section 58 of the return flow path 36, the air 56 no longer contains any aggressive gases.

Since the cattle 4 produce a considerable amount of heat, the spent air 52 will preferably have to be cooled before being returned to the accommodation space 3. If this is not done, the temperature of the accommodation space 3 will rise continuously since the cattle house 1 is of airtight construction. The temperature of the discharged air 52, i.e., the temperature of the air 50 in the accommodation space 3, will typically be 18-20°C. The cooler 40 cools the air to 10-14°C, for instance. The thus cooled air 59 flows to the space 42 where the light of the UV lamps 44 kills the micro-organisms possibly present in the air 59. Under the influence of the UV lamps, the temperature of the air flowing through the space 42 will rise again slightly, for instance 1 to 2 degrees. The air 60 leaving the space 40 has a temperature lower than the temperature of the accommodation space 3. Moreover, the air 60 is free of aggressive gases and micro-organisms and may accordingly be qualified here as fresh air. The fan 24 blows this fresh air 62 into the accommodation space 3 via a pipe 64 with outlet openings 66.

This pipe ensures a proportionate distribution of the fresh air in the accommodation space 3.

The return flow path 36 further comprises an exterior outlet 68, whereby a percentage of air 52 discharged from the accommodation space 3 is fed to the atmosphere and an inlet 70 whereby at least substantially the same amount of outside air 72 is supplied to the return flow path. This outlet 68 is located downstream of the biofilter 38, so that only air 42 which is free of aggressive gases is discharged into the atmosphere. The outlet is preferably located between the biofilter 38 and the cooler 40, so that warm, not yet cooled air is discharged. The inlet 70 is located downstream of the outlet 68. In this exemplary embodiment, the space 42 is provided with the inlet 70, so that any micro-organisms present in the outside air are also killed.

The above-mentioned percentage of the air stream in the return flow path which is discharged via exterior outlet 68 to the atmosphere is preferably between 0.5 and 20%, more particularly approximately 2% is discharged. Since approximately the same amount of outside air is supplied, the amount of carbon dioxide in the air of the accommodation space 3 is maintained below a predetermined maximum value. The fresh air 62 which is blown into the cattle house accordingly comprises, for a large proportion thereof, treated air which has been discharged from the accommodation space 3 and a small amount of outside air which has preferably been treated with UV light, with the result that the air 62 is free of micro-organisms and aggressive substances, comprises a carbon dioxide content which is not unfavourable for the cattle house and moreover has a temperature such that the accommodation space acquires a temperature as described hereinabove.

The air humidity of the discharged air 54 is rather high as a consequence of the evaporation of the wet excrements and the drying of the solid excrements during the period when they are located on the transport system 20. For that reason, the climate control system further comprises means whereby water vapour can be abstracted from the discharged air. In the exemplary embodiment discussed here, the cooler 40 is of a generally known type which, in addition to being capable of cooling air, is also capable of removing water vapour from the air. Supplied to the cooler 40 is cooling water 74 which will be heated by the cooler by virtue of the heat withdrawn from the spent air being given off to the cooling water. Preferably, the abstracted water vapour is supplied via line 76 to a biobed of the biofilter 38. The heated cooling water comprises energy which in turn can be used elsewhere. This energy is produced in particular by the cattle releasing heat to the accommodation space 3. The heat release of a pig may for instance be 200 w.

If so desired, the drying and evaporation of, respectively, the solid and liquid excrements during the period when they are disposed on the transport system 20 can be further accelerated by heating these excrements by means of the heating system 48. In this connection, highly advantageous use can be made of the heated cooling water leaving the cooler 40. Preferably, the cooling water delivered by the cooler 40 is supplied to the heating system 48. Via the heating system, the cooling water will give off heat to the surroundings and thereby sustain a temperature decrease. After this cooling water has partly or wholly traversed the heating system 48, it is returned to the cooler 40 to be used by the cooler again for cooling the air 56. It will be clear that thus a great deal of energy can be saved in that no external energy from outside the cattle house is necessary for heating excrements which are located in the discharge path. In particular, the cattle themselves provide the energy for the heating system 48. Moreover, the cooler 40 may even supply a surplus of energy which can be used for other purposes, both inside and outside the cattle house. Within the cattle house, the cooling water 74 can for instance be further used for heating the first floor portion 8.

Preferably, the climate control system 2 comprises an evaporator (not shown), which functions as cooler 40 whilst water vapour is abstracted from the air. As stated, this water vapour can be supplied in the form of condensate to a biobed of the biofilter 38, for instance. The evaporator is cooled by a cooling medium, such as for instance Freon, which is supplied to the evaporator in compressed form. After expansion of the cooling medium in the evaporator, the cooling medium is supplied to a heat exchanger (condenser) preferably via a compressor. The heat exchanger withdraws heat from the cooling medium which is subsequently supplied to the evaporator in recompressed form, whereafter the entire process can repeat itself. Preferably, cooling water is supplied to the heat exchanger. The cooling water is heated in the heat exchanger and, as described hereinabove, can optionally be used elsewhere. If the cooling water is included in a closed circuit, such as described hereinabove, for instance, and becomes too hot after some time, the cooler may further comprise selection means for directing the cooling medium to a second heat exchanger. This second heat exchanger may for instance give off its heat to the atmosphere or another medium. If after some time the temperature of the cooling water has decreased again, the selection means will direct the cooling medium to the heat exchanger of the cooling water again. It will be clear that other types of coolers can be used as well. For instance, it is also possible to use a condenser of a type which removes energy via cooling water and moreover is suitable for abstracting water vapour from the discharged air. This water vapour can for instance be supplied to the cooling water or to the biobed of the biofilter 38.

It will be clear that the climate control system does not introduce any aggressive substances into the environment at all. Moreover, energy is recovered from the discharged air, so that the system is highly advantageous from an economic point of view. Experiments have demonstrated that also the quality of the air in the accommodation space is particularly good. The air smells much fresher than in conventional systems. This is partly caused by the prevention of the production of aggressive substances through mixture of the liquid and solid excrements. The amount of aggressive substances in the accommodation space is far less than 1.5 ppm, whilst in conventional systems this percentage is often higher by at least a factor of 10. It also appears that the magnitude of the stream of fresh air can be reduced to, for instance, 0.4 m³ per kilogram of cattle accommodated in the cattle house 2. Compared with conventional systems, this is lower by a factor of 3.

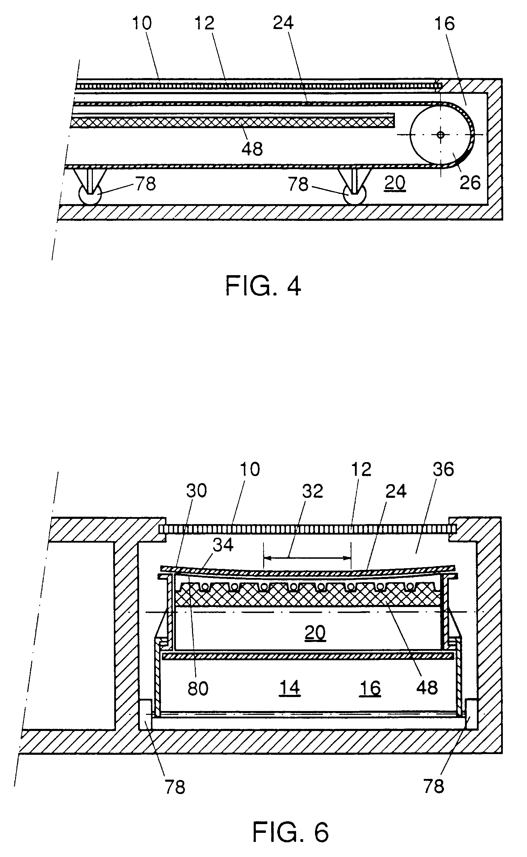

As is clearly indicated in Figs. 3 and 4, the first conveyor belt unit 28 can be provided with wheels 78, so that the entire conveyor belt unit can easily be moved. The concave surface 30 may be formed in the conveyor 24 itself, see Fig. 5. In that case, the conveyor can be entirely free between the reversing means 26, as shown in Fig. 4. It is also possible, however, to tension the conveyor along a bearing part 80 with a concave surface, so that the conveyor assumes the form of this bearing part, see also Fig. 3.

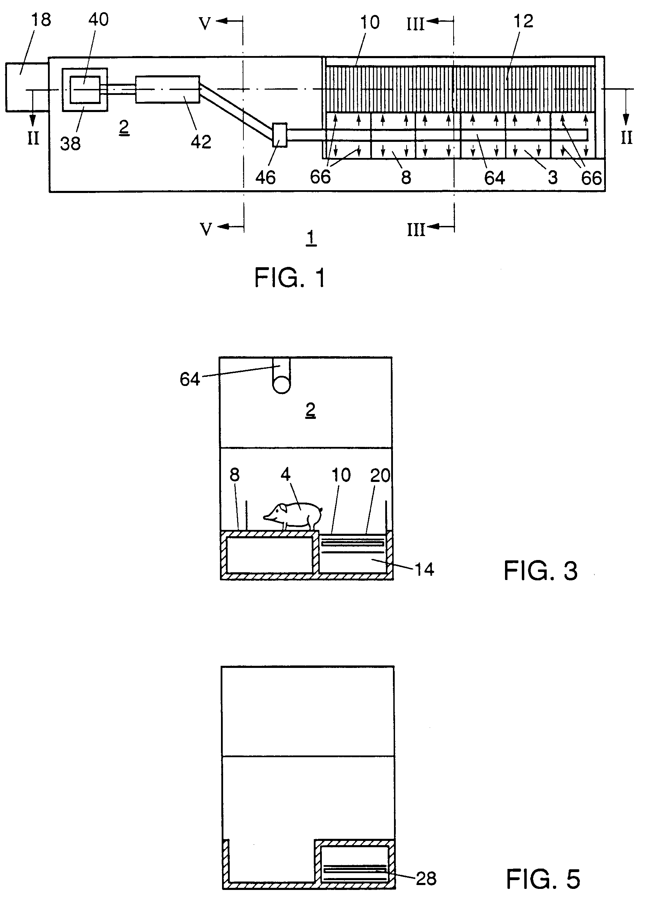

The climate control system may further comprise a control system 82 indicated by dotted lines in Fig. 1. The control system 82 comprises sensors 84 for determining, for instance, the temperature of the accommodation space 3 and the heating system 48, composition and amount of aggressive substances in the air of the accommodation space 3 and the relative air humidity of the accommodation space. A control unit 86 processes these data and, depending on these data, controls, for instance, the biofilter 38, cooler 40, UV lamps 44 and/or the fan 46. Moreover, the control unit can regulate the conveying speed of the first and/or second conveyor belt unit, depending on measured values determined by the sensors. Such a control unit 86 is known per se and will not be described in detail here.

Finally, Fig. 7 schematically shows a cattle house comprising a climate control system 2 according to the invention. The cattle house 1 is made up of a plurality of accommodation spaces 3. Each accommodation space 3 is provided with a first conveyor belt unit 22 which carries the excrements to a central, second conveyor belt unit 28. The central conveyor belt unit is located in a discharge space 14 which is separated from each accommodation space. The central, second conveyor belt unit 28 carries the excrements to a collecting space 18 where the excrements again arrive in at least substantially dried condition. The excrements are dried and separated from each other in the same manner as described hereinabove. However, because the central, second conveyor belt unit 28 is much longer than, for instance, the conveyor belt unit 28 of Fig. 1, the retention time on the central, second conveyor belt unit can be proportionally extended, so that the excrements can dry longer. As a consequence, the heating system can often be omitted. In this case, too, the air 54 is supplied to a biofilter 38 and further processed as described hereinabove. The thus obtained fresh air 62 is supplied to the accommodation spaces 3. It will be clear that it is also possible to provide each accommodation space 3 with separate air treatment means as described hereinabove.

Finally, it is observed that the climate control system described hereinabove only represents one possible advantageous embodiment of the invention. Many variants are conceivable. For instance, the fan can also be included at a different point in the return flow path 14 and the order of the biofilter, cooler and space 20 can be changed. Also, the transport system can be utilized without a closed air refreshment circuit. Moreover, the heating system can be arranged at a different point in the discharge path. The air by means of which the excrements are dried can moreover be supplied separately and accordingly need not be obtained directly from the accommodation spaces.

## Claims

1. A climate control system (2) for cattle houses (1) and the like, comprising a transport system on which liquid and solid excrements of the cattle (4) can be deposited and means for separating from each other at least a part of said liquid and solid excrements before they can mix, characterized in that the system (2) further comprises air supply means by means of which an air stream, heated by the animal heat of the cattle (4), is passed along the transport system (20), and a heating device (48) which together with the heated air stream provide for the separation of the liquid and solid excrements by drying the excrements at least to such an extent that the development of aggressive gases is practically prevented.

2. A climate control system (2) according to claim 1, characterized in that the system (2) further comprises a floor (6) in the cattle house (1) with apertures and the transport system (20) is located under the floor (6) of the cattle house (1), on which transport system (20) the liquid and solid excrements of the cattle (4) are deposited via the apertures (12) in the floor (6), the transport system (20) comprising a sloping surface (34) along which liquid excrements flow down to a collecting area (32) on the transport system (20) so that the liquid and solid excrements are at least partly mechanically separated from each other.

3. A climate control system (2) according to claim 2, charcterized in that the transport system (20) conveys the excrements along a discharge path (16) to a collecting space (18) which is located outside a space of the cattle house where the cattle (4) are accommodated.

4. A climate control system (2) according to claim 2 or 3, characterized in that the cattle house (1) comprises a plurality of mutually separated accommodation spaces where the cattle (4) are accommodated, each accommodation space comprising a floor with apertures (12) under which a part of the transport system (20) is located, the transport system (20) being so designed that excrements, which fall onto the transport system (20) via an aperture (12) in a floor (6), are conveyed to a central collecting space (18).

5. A climate control system (2) according to any one of the preceding claims 2-4, characterized in that the transport system (20) comprises at least one endless conveyor (24) passed round reversing means (26).

6. A climate control system (2) according to claim 5, characterized in that the collecting area extends (32) along at least a portion of an upper part of the conveyor (24), the collecting area (32) being bounded on either side by said surface (34) sloping in the transverse direction of the conveyor (24) and extending in the lengthwise direction of the conveyor (24).

7. A climate control system (2) according to any one of the preceding claims, characterized in that the heating device (48) is located under the upper part of the conveyor (24) and extend in the lengthwise direction of at least a portion of the conveyor (24).

8. A climate control system (2) according to any one of the preceding claims, characterized by means for supplying fresh air to at least a space (3) of the cattle house (1) where the cattle (4) are accommodated arid for discharging spent air of the accommodation space (3) for controlling the climate in the accommodation space (3), the air being passed along the transport system (20) in order to dry the excrements.

9. A climate control system (2) according to claim 8, characterized in that the climate control system (2) further comprises a return flow path (36) with air treatment means (38), the discharged, spent air of the accommodation space (3) being supplied to the return flow path (36), the air treatment means removing aggressive gases from the discharged spent air in order to obtain the fresh air which is returned to the accommodation space (3) via the return flow path (36).

10. A climate control system (2) according to claim 9, characterized in that the return flow path (36) partly coincides with the discharge path (16).

11. A climate control system (2) according to claim 10, characterized in that the air treatment means are included in a part of the return flow path (36) that does not coincide with the discharge path (16).

12. A climate control system (2) according to claim 9, 10 or 11, characterized in that the air treatment means comprise a cooler (40) for cooling the spent air, the heat withdrawn from the spent air by the cooler (40) being at least partly supplied to the heating device (22).

13. A climate control system (3) according to any one of the preceding claims 9-12, characterized in that the air treatment means further comprise a biofilter (38) for removing aggressive gases from the air, means (42) for abstracting water vapour from the spent air and for killing micro-organisms present in the spent air.

14. A climate control system (2) according to claims 9-13, characterized in that the return flow path (36) further comprises an exterior outlet (68) by which a percentage of the air which flows through the return flow path (36) is discharged to the atmosphere and an air inlet (70) by which outside air is supplied to the return flow path (36).

15. A climate control system (2) according to any one of the preceding claims, characterized in that the cattle house (1) is of at least substantially airtight construction.

16. A cattle house (1) comprising a climate control system (2) according to one or more of the preceding claims.

17. A method for processing liquid and solid excrements of cattle accommodated in a cattle house, where liquid and solid excrements of the cattle are deposited on a transport system and at least a part of the liquid and solid excrements of the cattle are separated from each other before they can mix, characterized in that drying is realized by utilising a separate heating device and by passing an air stream heated by the animal heat of the cattle along the transport system, wherein the excrements on the transport system are dried at least to such an extent that the development of aggressive gases is practically prevented.

18. A method according to claim 17, characterized in that the liquid and solid excrements of the cattle are passed via a discharge path to a collecting space which is located outside a space of the cattle house where the cattle are accommodated.

19. A method according to claim 18, characterized in that the excrements of the cattle are heated at least along a part of the discharge path.

20. A method according to any one of the claims 17-19, characterized in that fresh air is supplied to at least a space in the cattle house where the cattle are accommodated and spent air of the accommodation space is discharged in order to control the climate in the accommodation space, the spent air being passed along the at least partly separated liquid and solid excrements in order to dry the excrements.

21. A method according to claim 20, characterized in that the air discharged from the accommodation space is treated in order to obtain fresh air after it has been passed along the at least partly separated liquid and solid excrements and whereafter the fresh air obtained from the spent air is returned to the accommodation space.

22. A method according to any one of the claims 17-21, characterized in that the cattle house is of at least substantially airtight construction.

23. A method according to claim 20 or 21,, characterized in that the spent air is cooled before being returned to the accommodation space, the heat withdrawn from the spent air being at least partly used for heating the at least partly separated liquid and solid excrements.

24. A method according to any one of the claims 17-23, characterized in that the cattle house comprises a plurality of mutually separated accommodation spaces where the cattle are accommodated, the solid and liquid excrements of the cattle of each accommodation space being at least partly separated and conveyed to a central collecting space.

## Patentansprüche

1. Klimasteuerungssystem (2) für Viehställe (1) und ähnliches, mit einem Transportsystem, auf dem flüssige und feste Exkremente von dem Vieh (4) abgelegt werden können, und mit Einrichtungen, um zumindest einen Teil der flüssigen und festen Exkremente voneinander zu trennen, bevor sie gemischt werden können, dadurch gekennzeichnet, daß das System (2) außerdem Luftzuführeinrichtungen, mittels derer ein Luftstrom, der durch die Körperwärme von dem Vieh (4) erwärmt ist, entlang des Transportsystems (20) geleitet wird, und eine Erwärmungseinrichtung (48) aufweist, die zusammen mit dem erwärmten Luftstrom für die Trennung der flüssigen und festen Exkremente sorgt, indem die Exkremente zumindest bis zu einem solchen Ausmaß getrocknet werden, daß die Entstehung von aggressiven Gasen praktisch verhindert wird.

2. Klimasteuerungssystem (2) nach Anspruch 1, dadurch gekennzeichnet, daß das System (2) außerdem in dem Viehstall (1) einen Boden (6) mit Öffnungen aufweist und das Transportsystem (20) unter dem Boden des Viehstalls (1) angeordnet ist, wobei die flüssigen und festen Exkremente von dem Vieh (4) durch die Öffnungen (12) in dem Boden (6) auf das Transportsystem (20) abgelegt werden, wobei das Transportsystem (20) eine schräg verlaufende Fläche (34) hat, entlang derer die flüssigen Exkremente nach unten in einen Sammelabschnitt (32) auf dem Transportsystem (20) fließen, so daß die flüssigen und festen Exkremente zumindest teilweise mechanisch voneinander getrennt werden.

3. Klimasteuerungssystem (2) nach Anspruch 2, dadurch gekennzeichnet, daß das Transportsystem (20) die Exkremente entlang eines Entsorgungsweges (16) zu einem Sammelraum (18) führt, der außerhalb eines Raumes des Viehstalls angeordnet ist, in dem das Vieh (4) gehalten ist.

4. Klimasteuerungssystem (2) nach Anspruch 2 oder 3, dadurch gekennzeichnet, daß der Viehstall (1) eine Anzahl von voneinander getrennten Einstell-Räumen aufweist, in denen das Vieh (4) gehalten ist, wobei jeder Einstell-Raum einen Boden mit Öffnungen (12) aufweist, unter dem sich ein Teil des Transportsystems (20) befindet, wobei das Transportsystem (20) dazu ausgestaltet ist, daß Exkremente, die durch eine Öffnung (12) in einem Boden (6) auf das Transportsystem (20) fallen, zu einem zentralen Sammelraum (18) geführt werden.

5. Klimasteuerungssystem (2) nach einem der vorhergehenden Ansprüche 2-4, dadurch gekennzeichnet, daß das Transportsystem (20) zumindest einen Endlos-Förderer (24) aufweist, der um Rückkehr-Einrichtungen (26) herumgeführt ist.

6. Klimasteuerungssystem (2) nach Anspruch 5, dadurch gekennzeichnet, daß sich der Sammelabschnitt (32) entlang zumindest eines Bereiches von einem oberen Teil des Förderers (24) erstreckt, wobei der Sammelabschnitt (32) an jeder Seite durch die Fläche (34) gekrümmt ist, die in Querrichtung des Förderers (24) schräg verläuft und sich in der Längsrichtung des Förderers (24) erstreckt.

7. Klimasteuerungssystem (2) nach einem der vorhergehenden Ansprüche, dadurch gekennzeichnet, daß sich die Erwärmungseinrichtung (48) unter dem oberen Teil des Förderers (24) befindet und sich in der Längsrichtung von zumindest einem Bereich des Förderers (24) erstreckt.

8. Klimasteuerungssystem (2) nach einem der vorhergehenden Ansprüche, gekennzeichnet durch Einrichtungen zum Zuführen von Frischluft in zumindest einen Raum (3) von dem Viehstall (1), in dem das Vieh (4) gehalten ist, und zum Abführen von verbrauchter Luft aus dem Einstell-Raum (3), um das Klima in dem Einstell-Raum (3) zu steuern, wobei die Luft entlang des Transportsystems (20) geleitet wird, um die Exkremente zu trocknen.

9. Klimasteuerungssystem (2) nach Anspruch 8, dadurch gekennzeichnet, daß das Klimasteuerungssystem (2) außerdem einen Rückführstromweg (36) mit Luftbehandlungseinrichtungen (38) aufweist, wobei die abgeführte, verbrauchte Luft aus dem Einstell-Raum (3) in den Rückführstromweg (36) geleitet wird, wobei die Luftbehandlungseinrichtungen aggressive Gase aus der abgeleiteten, verbrauchten Luft entfernen, um die Frischluft zu erhalten, die über den Rückführstromweg (36) zurück in den Einstell-Raum (3) geleitet wird.

10. Klimasteuerungssystem (2) nach Anspruch 9, dadurch gekennzeichnet, daß der Rückführstromweg (36) teilweise mit dem Entsorgungsweg (16) zusammenläuft.

11. Klimasteuerungssystem (2) nach Anspruch 10, dadurch gekennzeichnet, daß die Luftbehandlungseinrichtungen in einem Teil des Rückführstromweges (36) enthalten sind, der nicht mit dem Entsorgungsweg (16) zusammenläuft.

12. Klimasteuerungssystem (2) nach Anspruch 9, 10 oder 11, dadurch gekennzeichnet, daß die Luftbehandlungseinrichtungen eine Kühleinrichtung (40) enthalten, um die verbrauchte Luft zu kühlen, wobei die Wärme, die mittels der Kühleinrichtung (40) aus der verbrauchten Luft herausgezogen wird, zumindest teilweise der Erwärmungseinrichtung (22) zugeführt wird.

13. Klimasteuerungssystem (3) nach einem der Ansprüche 9-12, dadurch gekennzeichnet, daß die Luftbehandlungseinrichtungen außerdem einen Bio-Filter (38), um aggressive Gase aus der Luft zu entfernen, und Einrichtungen (42) aufweisen, um Wasserdampf aus der verbrauchten Luft zu entfernen und um Mikroorganismen abzutöten, die in der verbrauchten Luft vorhanden sind.

14. Klimasteuerungssystem (2) nach einem der Ansprüche 9-13, dadurch gekennzeichnet, daß der Rückführstromweg (36) außerdem einen Außen-Auslaß (68), durch den ein Prozentsatz der Luft, die durch den Rückführstromweg (36) strömt, in die Atmosphäre abgeführt wird, und einen Lufteinlaß (70) hat, durch den Außenluft in den Rückführstromweg (36) geführt wird.

15. Klimasteuerungssystem (2) nach einem der vorhergehenden Ansprüche, dadurch gekennzeichnet, daß der Viehstall (1) eine im wesentlichen luftdichte Konstruktion ist.

16. Viehstall (1) mit einem Klimasteuerungssystem (2) nach einem oder mehreren der vorhergehenden Ansprüche.

17. Verfahren zum Verarbeiten von flüssigen und festen Exkrementen von Vieh, das in einem Viehstall gehalten ist, wobei flüssige und feste Exkremente von dem Vieh auf einem Transportsystem abgelegt und zumindest ein Teil der flüssigen und festen Exkremente von dem Vieh voneinander getrennt werden, bevor sie gemischt werden können, dadurch gekennzeichnet, daß durch Verwenden einer separaten Erwärmungseinrichtung und durch Leiten eines durch die Körperwärme von dem Vieh erwärmten Luftstromes entlang des Transportsystems erreicht wird, wobei die Exkremente auf dem Transportsystem zumindest bis zu einem solchen Ausmaß getrocknet werden, daß die Entstehung von aggressiven Gasen praktisch verhindert wird.

18. Verfahren nach Anspruch 17, dadurch gekennzeichnet, daß die flüssigen und festen Exkremente von dem Vieh über einen Entsorgungsweg zu einem Sammelraum geleitet werden, der außerhalb eines Raumes des Viehstalls angeordnet ist, in dem das Vieh gehalten ist.

19. Verfahren nach Anspruch 18, dadurch gekennzeichnet, daß die Exkremente von dem Vieh zumindest entlang eines Teils des Entsorgungsweges erwärmt werden.

20. Verfahren nach einem der Ansprüche 17-19, dadurch gekennzeichnet, daß Frischluft in zumindest einen Raum in dem Viehstall geleitet wird, in dem das Vieh gehalten ist, und verbrauchte Luft aus dem Einstell-Raum abgeführt wird, um das Klima in dem Einstell-Raum zu steuern, wobei die verbrauchte Luft entlang der zumindest teilweise getrennten flüssigen und festen Exkrementen geleitet wird, um die Exkremente zu trocknen.

21. Verfahren nach Anspruch 20, dadurch gekennzeichnet, daß die aus dem Einstell-Raum abgeführte Luft behandelt wird, um Frischluft zu erhalten, nachdem sie entlang der zumindest teilweise getrennten flüssigen und festen Exkremente geleitet wurde, wonach die Frischluft, die aus der verbrauchten Luft erhalten wird, zurück in den Einstell-Raum geleitet wird.

22. Verfahren nach einem der Ansprüche 17-21, dadurch gekennzeichnet, daß der Viehstall eine zumindest im wesentlichen luftdichte Konstruktion ist.

23. Verfahren nach Anspruch 20 oder 21, dadurch gekennzeichnet, daß die verbrauchte Luft abgekühlt wird, bevor sie in den Einstell-Raum zurückgeführt wird, wobei die Wärme, die der verbrauchten Luft entzogen wurde, zumindest teilweise zum Erwärmen der zumindest teilweise getrennten flüssigen und festen Exkremente verwendet wird.

24. Verfahren nach einem der Ansprüche 17-23, dadurch gekennzeichnet, daß der Viehstall eine Anzahl von voneinander getrennten Einstell-Räumen aufweist, in denen das Vieh gehalten wird, wobei die festen und flüssigen Exkremente von dem Vieh aus jedem Einstell-Raum zumindest teilweise getrennt und zu einem mittleren Sammelraum geführt werden.

## Revendications

1. Système de climatisation (2) pour bâtiments pour le bétail (1) et installations analogues, comprenant un système de transport sur lequel on peut déposer les excréments liquides et solides du bétail (4) et des moyens pour séparer les uns des autres au moins une partie des dits excréments liquides et solides avant qu'ils ne puissent se mélanger, caractérisé en ce que le système (2) comprend en outre des moyens d'apport d'air grâce auxquels on fait passer un courant d'air, chauffé par la chaleur animale du bétail (4), le long du système de transport (20) et un dispositif de chauffage (48), qui permet, avec le courant d'air chauffé, la séparation des excréments liquides et solides par séchage des excréments au moins jusqu'à un point tel que le dégagement de gaz agressifs soit pratiquement évité.

2. Système de climatisation (2) selon la revendication 1, caractérisé en ce que le système (2) comprend en outre un plancher (6) dans le bâtiment pour le bétail (1) avec des ouvertures et en ce que le système de transport (20) est situé sous le plancher (6) du bâtiment pour le bétail (1), système de transport (20) sur lequel sont déposés les excréments liquides et solides du bétail (4) par l'intermédiaire des ouvertures (12) dans le plancher (6), le système de transport (20) comportant une surface inclinée (34) le long de laquelle les excréments liquides s'écoulent vers une aire de collecte (32) sur le système de transport (20), de sorte que les excréments liquides et solides soient au moins partiellement séparés les uns des autres d'une manière mécanique.

3. Système de climatisation (2) selon la revendication 2, caractérisé en ce que le système de transport (20) transfère les excréments le long d'un chemin d'évacuation (16) vers un espace de collecte (18), qui est situé à l'extérieur de l'espace du bâtiment pour le bétail, où le bétail (4) est logé.

4. Système de climatisation (2) selon la revendication 2 ou 3, caractérisé en ce que le bâtiment pour le bétail (1) comprend une pluralité d'espaces de séjour séparés les uns des autres, où le bétail (4) est logé, chaque espace de séjour comportant un plancher avec des ouvertures (12) sous lequel est située une partie du système de transport (20), le système de transport (20) étant conçu de manière à ce que les excréments, qui tombent sur le système de transport (20) par l'intermédiaire des ouvertures (12) dans le plancher (6), soient transférés vers l'espace de collecte central (18).

5. Système de climatisation (2) selon l'une quelconque des revendications précédentes 2 à 4, caractérisé en ce que le système de transport (20) comprend au moins un convoyeur sans fin (24) passant autour de moyens d'inversion (26).

6. Système de climatisation (2) selon la revendication 5, caractérisé en ce que l'aire de collecte (32) s'étend le long d'au moins une portion d'une partie supérieure du convoyeur (24), l'aire de collecte (32) étant liée de chaque côté à ladite surface (34) inclinée dans le sens transversal du convoyeur (24) et s'étendant dans le sens de la longueur du convoyeur (24).

7. Système de climatisation (2) selon l'une quelconque des revendications précédentes, caractérisé en ce que le dispositif de chauffage (48) est situé sous la partie supérieure du convoyeur (24) et s'étend dans le sens de la longueur d'au moins une partie du convoyeur (24).

8. Système de climatisation (2) selon l'une quelconque des revendications précédentes, caractérisé par des moyens pour apporter de l'air frais dans au moins un espace (3) du bâtiment pour le bétail (1) dans lequel est logé le bétail (4) et pour évacuer l'air usagé de l'espace de séjour (3) pour la climatisation de l'espace de séjour (3), l'air passant le long du système de transport (20) afin de sécher les excréments.

9. Système de climatisation (2) selon la revendication 8, caractérisé en ce que le système de climatisation (2) comprend en outre un chemin de retour (36) avec des moyens de traitement de l'air (38), l'air usagé évacué de l'espace de séjour (3) étant amené vers le chemin de retour (36), les moyens de traitement de l'air éliminant les gaz agressifs de l'air usagé évacué, afin d'obtenir un air frais, qui est renvoyé vers l'espace de séjour (3) par l'intermédiaire du chemin de retour (36).

10. Système de climatisation (2) selon la revendication 9, caractérisé en ce que le chemin de retour (36) coïncide partiellement avec le chemin d'évacuation (16).

11. Système de climatisation (2) selon la revendication 10, caractérisé en ce que les moyens de traitement de l'air sont inclus dans une partie du chemin de retour (36), qui ne coïncide pas avec le chemin d'évacuation (16).

12. Système de climatisation (2) selon la revendication 9, 10 ou 11, caractérisé en ce que les moyens de traitement de l'air comprennent un appareil de refroidissement (40) pour refroidir l'air usagé, la chaleur récupérée de l'air usagé par l'appareil de refroidissement (40) étant au moins partiellement fournie au dispositif de chauffage (22).

13. Système de climatisation (2) selon l'une quelconque des revendications précédentes 9 à 12, caractérisé en ce que les moyens de traitement de l'air comprennent en outre un filtre biologique (38) pour éliminer de l'air les gaz agressifs, des moyens (42) pour retirer la vapeur d'eau de l'air usagé et pour tuer les micro-organismes présents dans l'air usagé.

14. Système de climatisation (2) selon les revendications 9 à 13, caractérisé en ce que le chemin de retour (36) comprend en outre un orifice extérieur (68) par lequel on évacue dans l'atmosphère un pourcentage de l'air qui circule dans le chemin de retour (36) et un orifice d'entrée (70) par lequel on amène de l'air extérieur dans le chemin de retour (36).

15. Système de climatisation (2) selon l'une quelconque des revendications précédentes caractérisé en ce que le bâtiment pour le bétail (1) est une construction au moins essentiellement étanche à l'air.

16. Bâtiment pour le bétail (1) comprenant un système de climatisation (2) selon l'une quelconque des revendications précédentes.

17. Procédé pour traiter les excréments liquides et solides du bétail séjournant dans un bâtiment pour le bétail, dans lequel les excréments liquides et solides du bétail sont déposés sur un système de transport et au moins une partie des excréments liquides et solides du bétail sont séparés les uns des autres avant qu'ils ne puissent se mélanger, caractérisé en ce que le dit séchage est réalisé par utilisation d'un dispositif de chauffage séparé et par passage d'un courant d'air chauffé par la chaleur animale du bétail le long du système de transport, dans lequel les excréments sur le système de transport sont séchés jusqu'à un point tel que le dégagement de gaz agressifs soit pratiquement évité.

18. Procédé selon la revendication 17, caractérisé en ce que les excréments liquides et solides du bétail sont transportés par l'intermédiaire d'un chemin d'évacuation vers un espace de collecte, qui est situé à l'extérieur de l'espace du bâtiment pour le bétail, où le bétail est logé.

19. Procédé selon la revendication 18, caractérisé en ce que les excréments du bétail sont chauffés au moins le long d'une partie du chemin d'évacuation.

20. Procédé selon l'une quelconque des revendications 17 à 19, caractérisé en ce que de l'air frais est amené vers au moins un espace dans le bâtiment pour le bétail, où le bétail est logé, et en ce que l'air usagé de l'espace de séjour est évacué afin de contrôler la climatisation dans l'espace de séjour, l'air usagé passant le long des excréments liquides et solides, séparés au moins partiellement, afin de sécher les excréments.

21. Procédé selon la revendication 20, caractérisé en ce que l'air évacué de l'espace de séjour est traité afin d'obtenir de l'air frais, une fois qu'il est passé le long des excréments liquides et solides, séparés au moins partiellement, et après quoi l'air frais obtenu à partir de l'air usagé est renvoyé vers l'espace de séjour.

22. Procédé selon l'une quelconque des revendications 17 à 21, caractérisé en ce que le bâtiment pour le bétail est une construction au moins essentiellement étanche à l'air.

23. Procédé selon la revendication 20 ou 21, caractérisé en ce que l'air usagé est refroidi avant d'être renvoyé vers l'espace de séjour, la chaleur retirée de l'air usagé étant au moins partiellement utilisée pour le chauffage des excréments liquides et solides, séparés au moins partiellement.

24. Procédé selon l'une quelconque des revendications 17 à 23, caractérisé en ce que le bâtiment pour le bétail comprend une pluralité d'espaces de séjour séparés les uns des autres, dans lesquels le bétail est logé, les excréments liquides et solides du bétail de chaque espace de séjour étant séparés an moins partiellement et convoyés vers un espace de collecte central.
